# EUROPEAN PATENT SPECIFICATION

(11) **EP 1 800 572 B1**
(45) Date of publication and mention of the grant of the patent: **13.02.2008**
(21) Application number: 05028265.6
(22) Date of filing: 22.12.2005
(51) Int. Cl.: A47J 31/06

(54) **Tea-making device with a time control**
Gerät zum Aufbrühen von Tee mit Zeitmessung
Appareil pour l'infusion de thé avec temporisation

(43) Date of publication of application: 27.06.2007
(73) Proprietor: Yang, Heng-Te, Tainan City (TW)
(72) Inventor: Yang, Heng-Te, Tainan City (TW)
(74) Representative: Volpert, Marcus

(56) References cited:
- US-B1- 6 802 246

## Description

### Field of the Invention :

The present invention relates to tea-making devices with time control capability, more particularly to a tea-making device with a time control that utilizes the time control to drive other components therein, whereby tea leaves and tea soup will be separated. Therefore, the present invention can prevent the tea soup from getting bitter due to over-soakage of the tea leaves.

### Background of the Invention :

Drinking tea is essential to many modern people. The time period that tea leaves will be soaked in water is an important factor to making good tea, besides the water temperature. Therefore, tea makers capable of performing swift tea/leaves-soup separation are very popular among modern people. A tea-making device of the prior art comprises a kettle body with a top opening for placing a tea basket. To make tea, the basket is disposed with tea leaves, and then the leaves are poured with hot water. The water will flow into the kettle body until its level exceeds the basket. Eventually, the tea-making device is covered by a top cap. Thereby, the tea leaves can be immersed in the water for a predetermined time, after which the basket is taken from the kettle body and the tea soup will be ready to serve. However, the tea-making device of the prior art has the disadvantage of forgetting the soakage of the leaves in the water and therefore the tea soup will be bitter due to over soakage. Oppositely, there would be a premature departure of the tea leaves from the soup due to an impatient user, making the tea soup tasteless.
Document US-A-6 802 246 discloses a tea-making device with a timer mounted in a main body.

### Summary of the Invention :

Accordingly, the primary objective the present invention is to provide a tea-making device with a time control wherein the time control can be flexibly set so that other components of the tea-making device will work accordingly to separate the tea leaves and the tea soup therein within a preset time. This present invention is to prevent the tea soup from getting bitter due to over-soakage of the tea leaves.

To achieve above object, the present invention provides a tea-making device with a time control. The tea making device comprises a main body provided with a upper receptacle with a positioning groove on an inner wall thereof, said upper receptacle further including a central annular groove coupled with a spring and a central through hole running through a bottom side thereof, an lower half of said main body being provided with a lower receptacle with a bulged filter mount with a lower retaining groove for connecting a longitudinally extended filter; a driving stick mount mounted within said upper receptacle of said main body, a lateral wall of said driving stick mount being uniformed distributed with a plurality of guide projections each having a lower obliquely-cut surfaces, said driving stick mount further including a positioning bulge adjacent to one of said guide projections and a driving stick with a terminal ball stopper mounted on a bottom side of said driving stick mount; a locking mount mounted within said upper receptacle having a central driving-stick insertion mount on a top surface thereof; a bottom cup attached to a bottom side of said main body having a central through hole on a bottom portion thereon; a top cap attached to a top side of said main body; a timer mounted within said top cap, a bottom side of said timer having a transmission gear wheel and an insertion wheel; a driving ring with a central through hole installed underneath said timer; and a driven disk coupled with said driving ring, a bottom surface of said driven disk being uniformly provided with a plurality of driven blades each having an upper obliquely-cut surface.

### Brief Description of the Drawings :

Fig. 1 is an exploded perspective view of a tea-making device with a time control of the present invention.
Fig. 2 is another exploded perspective view of the tea-making device with a time control in Fig. 1.
Fig. 3 is a perspective view of the tea-making device with a time control in Fig. 1.
Fig. 4 is a lateral cross-sectional view of the tea-making device with a time control in Fig. 1.
Fig. 5 is another perspective view of the tea-making device with a time control in Fig. 1, showing the bottom cup is opened so as to place tea leaves in the lower receptacle at the bottom of the main body.
Fig. 6 is another lateral view of the tea-making device with a time control, wherein the tea leaves in the lower receptacle are not soaked with the hot water.
Fig. 7 is another lateral view of the tea-making device with a time control, wherein the tea leaves in the lower receptacle are soaked with the hot water.

### Detailed Description of the Invention:

The various objects and advantages of the present invention will be more readily understood from the following detailed description when read in conjunction with the appended drawings.

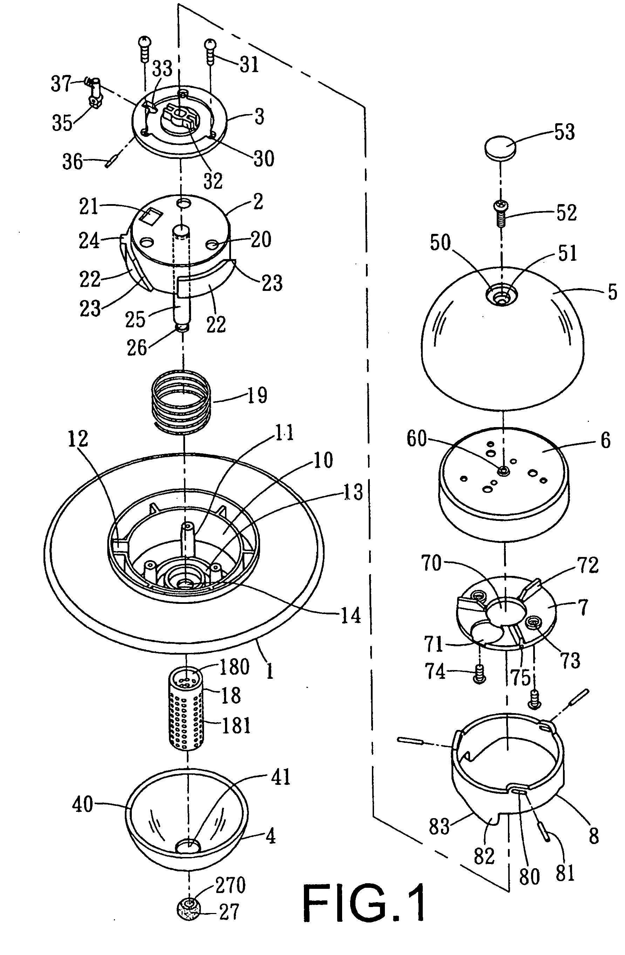

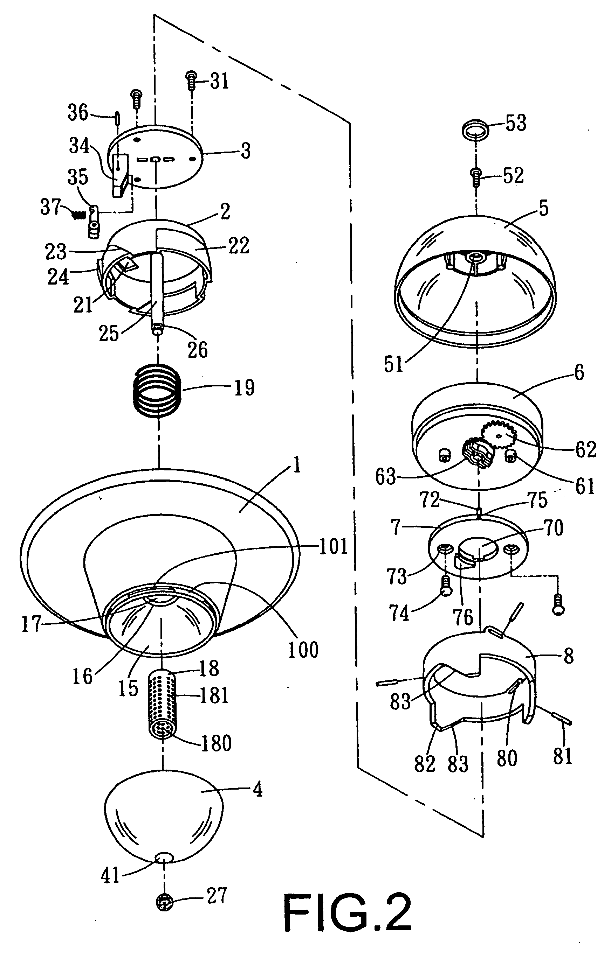

Referring to Figs. 1 and 2, a tea-making device with a time control according to the present invention comprises a main body 1, a driving stick mount 2, a locking mount 3, a bottom cup 4, a top cap 5, a timer 6, a driving ring 7 and a driven disk 8. The main body 1 includes an upper receptacle 10 in which a plurality of locking columns 11 are erected. On one inner side of the upper receptacle 10, there is a longitudinal positioning groove 12. The upper receptacle 10 is further provided with an inner annular groove 13 for fixing a spring 19 and a central through hole 14 running the bottom thereof. The bottom side of the upper receptacle 10 further comprises a lower receptacle 15 wherein a filter mount 16 is located. The filter mount 16 is provided with a lower retaining groove 17 to which one end of a filter 18 is attached. The filter 18 comprises a hollow inner space 180 and a multitude of filtering holes 181 on the inner wall of the hollow inner space 180. The bottom end of the main body 1 is further provided with a lower flange 100 with a plurality of retaining projections 101. The driving stick mount 2 is mounted within the upper receptacle 10, which has a plurality of through holes 20, a lower window 21 and a plurality of guide projections 22 on the lateral wall of the driving stick mount 2. Each of the guide projections 22 has a lower obliquely-cut surface 23. One of the guide projections 22 is further provided with a positioning bulge 24. The bottom side of the driving stick mount 2 is downwardly provided with a driving stick 25. The bottom end of the driving stick 25 is provided with an annular groove 26 for locking a ball stopper 27 made of a rubber material. To be connected with the lower receptacle 15, the top side of the ball stopper 27 is provided with a locking groove 270. The locking mount 3 is mounted within the upper receptacle 10 having a central driving-stick insertion mount 32 on the top surface thereof. The locking mount 3 are further provided with through holes 30 for being inserted by locking pieces 31 so that the locking columns 11 within the upper receptacle 10. A top side of the locking mount 3 is provided with an upper window 33 that is aligned with a positioning mount 34 and a positioning piece 35 pivotally mounted within the upper window 33. Near the top end of the positioning piece 35, there is a spring 37. The bottom cup 4 is attached to the bottom side of the main body 1 that has a central through hole 41 on the bottom portion thereon. The top rim of the bottom cup 4 is further provided with corresponding retaining flange 40. The top cap 5 attached to the top side of the main body 1 is provided with a top dip 50 in which a central through hole 51 is formed for holding a top locking piece 52. The top dip 50 further including a top plug 53. The timer 6 is mounted within the top cap 5. The bottom side of the timer 6 has a transmission gear wheel 62 and an insertion wheel 63. The top surface of the timer 6 is provided with a hole with a screw thread 60 for the insertion of the top locking piece 52 through the through hole 51 of the top cap 5. The driving ring 7 with a central through hole 70 installed underneath the timer 6. The top side of the driving ring 7 is further provided with a gear receptacle 71, a plurality of blade projections 72 and a plurality of through holes 73 for the insertion of locking pieces 74 respectively into the column projections 61 of the timer 6. The circumference wall of the driving ring 7 is provided with a plurality of pin holes 75, and the bottom side of the driving ring 7 is provided with a driving piece 76. The driven disk 8 is coupled with the driving ring 7, having the bottom surface thereon being uniformly provided with a plurality of driven blades 82 each having an upper obliquely-cut surface 83. The lateral wall of the driven disk 8 is provided with pin slots 80 corresponding to the pin holes 75 of the driving ring 7 for the insertion of pins 81 that connect the driving ring 7 and driven disk 8.

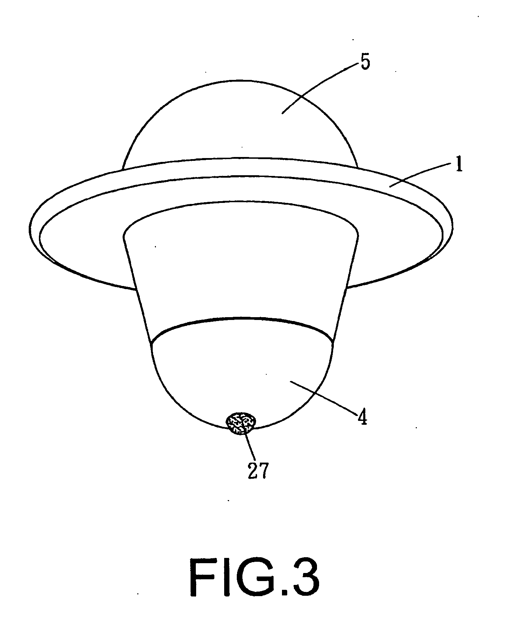

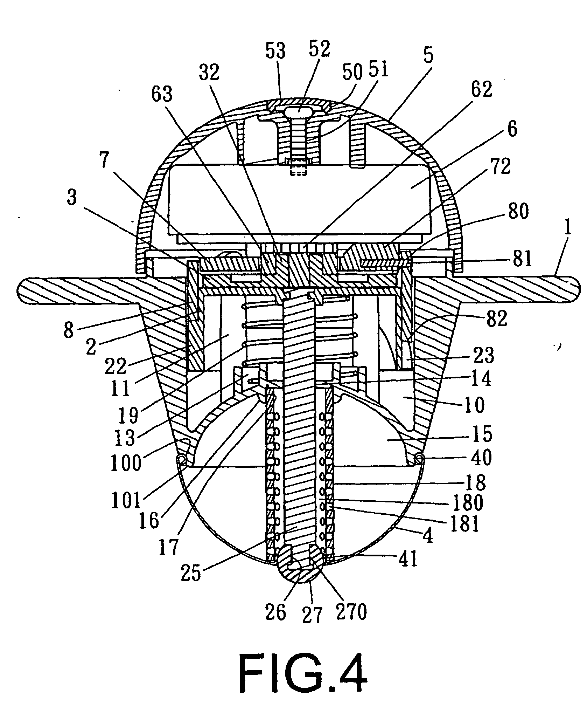

To assemble the tea-making device with a time control, as shown in Figs. 1 to 4, one end of the filter 18 is engaged with the lower retaining groove 17 of the main body 1, and the spring 19 is mounted on the annular groove 13 within the upper receptacle 10 of the main body 1. The driving stick mount 2 is then disposed in the upper receptacle 10, whereby the locking columns 11 in the upper receptacle 10 will go through the through holes 20 on the driving stick mount 2. The positioning bulge 24 of the driving stick mount 2 is inserted into the positioning groove 12 within the main body 1, whereby the driving stick mount 2 will be restricted to move up and down in the upper receptacle 10. Further, as the driving stick mount 2 is supported upward by the spring 19, the driving stick 25 extended downward from the bottom side of the driving stick mount 2 will run through the through hole 14 of the main body 1 and the hollow inner space 180 of the filter 18. The ball stopper 27 is then attached to the lower end of the driving stick 25. The bottom cup 4 is connected to the bottom side of the main body 1 through the engagement between the retaining flange 40 formed on the upper rim of the bottom cup 4 and the retaining projection 101 formed on the bottom side of the main body 1. The ball stopper 27 on the driving stick 25 will block the through hole 41 within the bottom cup 4. The pivot 36 is used to pivotally confine the positioning piece 35 in the positioning mount 34, whereby the spring 37 in the upper window 33 of the locking mount 3 will support against the upper face of the positioning piece 35, and the lower face of the positioning piece 35 will bulge outward. The locking mount 3 is retained by the locking columns 11 and therefore housed within the upper receptacle 10 of the main body 1, the locking columns 11 connecting the locking mount 3 by the locking pieces 31 going through the thought holes 30. The positioning mount 34 on the bottom of the locking mount 3 is going through the lower window 21 of the driving stick mount 2. The driven disk 8 is placed onto the driving ring 7 so that it encircles the driving ring 7 and locked with the driving ring 7 by inserting pins 81 into the pin holes 75 on the driving ring 7 through the pin slots 80. The insertion wheel 63 of the timer 6 is going through the central hole 70 on the driving ring 7, while the top locking piece 52 is inserted into the insertion hole 50 of the top cap 5, whereby the timer 6 will be confined within the top cap 5. The top plug 53 is then inserted into the top dip 50 on the top of the top cap 5. Finally, the top cap 5 and the associated components are installed on the upper surface of the main body 1, and the driven blades 82 on the driven disk 8 will insert into the upper receptacle 10 of the main body 1, whereby the upper obliquely-cut surfaces 83 and the lower obliquely-cut surfaces 23 are tightly engaged. Whereas the insertion piece 63 of the timer 6 will insert into the driving-stick insertion mount 32 of the driving stick mount 2. Thereby, the tea-making device with a time control is assembled.

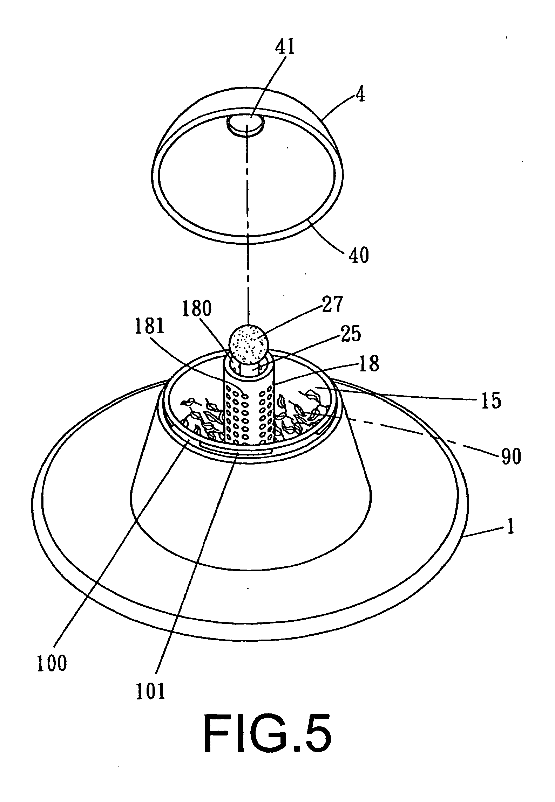

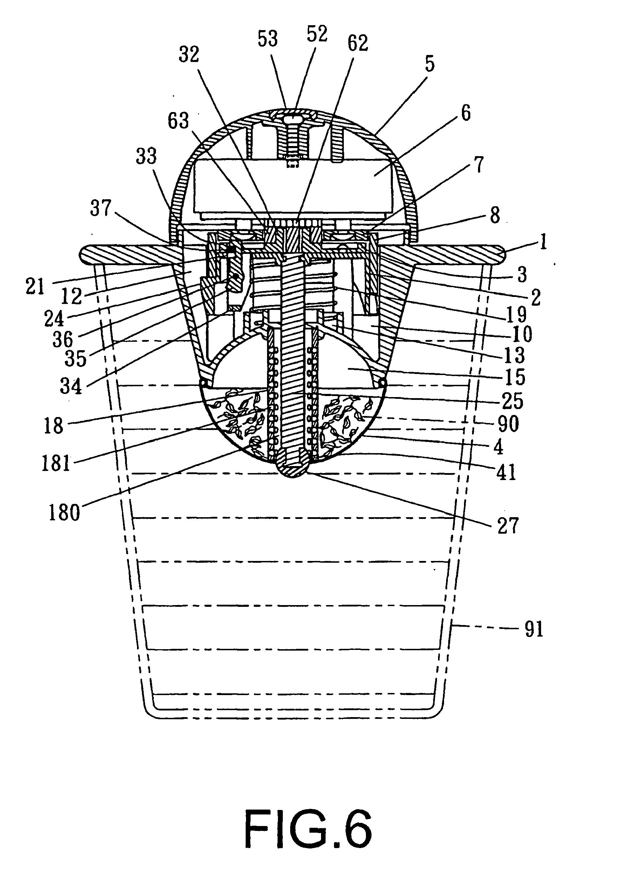

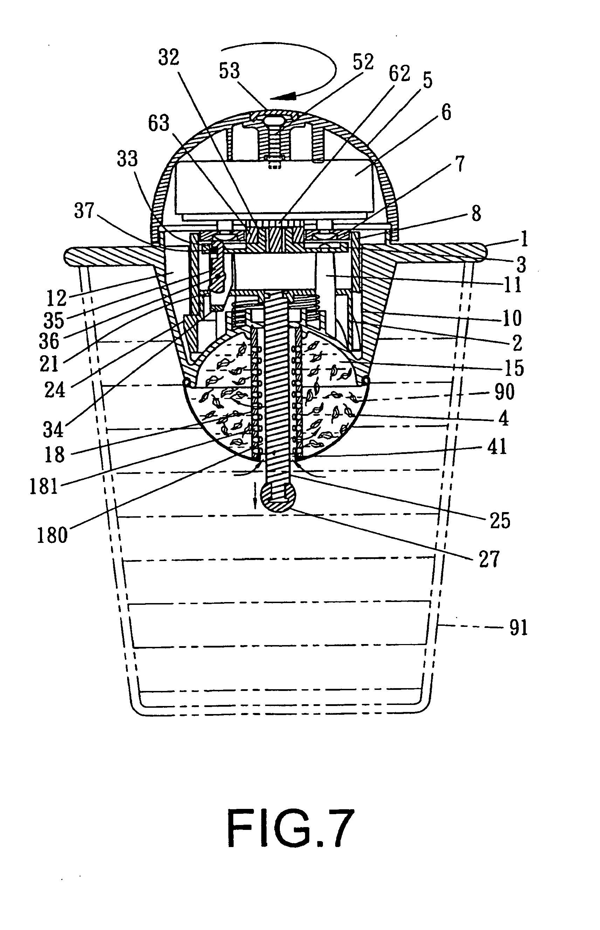

To use the tea-making device with a time control, as shown in Figs. 5, 6 and 7, the bottom cup 4 is taken from the main body 1, and the main body 1 is placed up side down for disposing a fair amount of tea leaves 90 in the lower receptacle 15 therein. The bottom cup 4 is then closed onto the main body 1, whereby the ball stopper 27 on the driving stick 25 will seal the through hole 41 of the bottom cup 4, as shown in Fig. 6. The tea-making device with a time control is flipped and then placed on a container 91 filled with hot water, whereby the bottom cup 4 will be immersed in the hot water. The top cap 5 is then rotated to set a preferred soaked time. As the top cap 5 is being rotated, the timer 6, the driving ring 7 and the driven disk 8 within the top cap 5 will be rotated accordingly, whereby the insertion wheel 63 of the timer 6 will be engaged with the driving-stick insertion mount 32 of the locking mount 3. Therefore, the insertion wheel 63 will not rotate, and there is a reverse displacement between the upper obliquely-cut surfaces 83 of the driven blades 82 on the bottom of the driven disk 8 and the lower obliquely-cut surfaces 23 of the guide projections 22 on the driving stick mount 2, resulting in a restriction of motion on the driving stick mount 2 by its positioning bulge 24 being confined in the positioning groove 12. Therefore, the driving stick mount 2 will not rotated and will move up and down as supported by the driven blades 82. When the driving ring 7 is driven to rotate by the top cap 5, the driven piece 76 thereon will push against the positioning piece 35 installed in the upper window 33 of the locking mount 3, thereby pressing the lateral spring 37. As a result, the lower end of the positioning piece 35 will rotate inwardly about the pivot 36, and the downward motion of the driving stick mount 2 will not be hindered. When the driven blades 82 on the driven disk 8 are engaged with the driving stick mount 2 of the driving stick mount 2, the driving stick mount 2 will be pushed downward by the driven disk 8 and therefore squeezes the spring 19. After the driving stick mount 2 is shifted down, the driving piece 76 of the driving ring 7 will be rotated away from the positioning piece 35, and the positioning piece 35 will be supported against by the spring 37 no more and will go back to the original position; the lower end of the positioning piece 35 will rotate outward to engage the upper rim of the lower window 21 on the driving stick mount 2, as shown in Fig. 7. Thereby, the driving stick mount 2 retained by the above structure will move downward and the ball stopper 27 on the end of the driving stick 25 will move accordingly downward to leave the through hole 41 on the bottom cup 4, whereby hot water will enter through the through hole 41 and the filter holes 181 on the filter 8 into the bottom cup 4. The tea leaves 90 in the bottom cup 4 are there fore soaked. The timer 6 will start to count as driven by the top cap 5. The top cap 5, the driving ring 7 and the driven disk 8 will gradually rotate backward. When the driving piece 76 on the driving ring 7 rotates backward to the position where the positioning piece 35 of the locking mount 3 situates, it will push the positioning piece 35 aside that in turn squeezes the spring 37. The lower end of the positioning piece 35 will again rotate inward and hinder the driving stick mount 2 no more, whereby the driving stick mount 2 will shift upward. When the upper obliquely-cut surfaces 83 of the driven blades 82 on the bottom of the driven disk 8 and the lower obliquely-cut surfaces 23 of the guide projections 22 on the driving stick mount 2 are meet again, the driving stick mount 2 will not be supported against by the driven blades 82 on the driven disk 8 anymore, and the spring 17 will urge the driving stick mount 2 and the associated driving stick 25 to move upward, till the upper obliquely-cut surfaces 83 and the lower obliquely-cut surfaces 23 are tightly engaged; at that time, the ball stopper 27 on the end of the driving stick 25 will block the through hole 41 again, thereby separating the tea leaves 90 from the tea soup in the container 91, as shown in Fig. 6. Therefore, a person can set the soakage time according to the person's preference. After the tea-making device with a time control is used, the tea leaves left in the bottom cup 4 can be easily taken out for cleaning the main body 1.

The present invention is thus described, and it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A tea-making device with a time control, comprising:
a main body (1) provided with a upper receptacle (10) with a positioning groove (12) on an inner wall thereof, said upper receptacle (10) further including a central annular groove (13) coupled with a spring (19) and a central through hole (14) running through a bottom side thereof, an lower half of said main body being provided with a lower receptacle (15) with a bulged filter mount (16) with a lower retaining groove (17) for connecting a longitudinally extended filter (18);
a driving stick mount (2) mounted within said upper receptacle (10) of said main body, a lateral wall of said driving stick mount being uniformed distributed with a plurality of guide projections (22) each having a lower obliquely-cut surfaces (23), said driving stick mount (2) further including a positioning bulge (24) adjacent to one of said guide projections (22) and a driving stick (25) with a terminal ball stopper (27) mounted on a bottom side of said driving stick mount;
a locking mount (3) mounted within said upper receptacle (10) having a central driving-stick insertion mount (32) on a top surface thereof;
a bottom cup (4) attached to a bottom side of said main body having a central through hole (41) on a bottom portion thereon;
a top cap (5) attached to a top side of said main body;
a timer (6) mounted within said top cap (5), a bottom side of said timer having a transmission gear wheel (62) and an insertion wheel (63);
a driving ring (7) with a central through hole (70) installed underneath said timer (6); and
a driven disk (8) coupled with said driving ring (7), a bottom surface of said driven disk being uniformly provided with a plurality of driven blades (82) each having an upper obliquely-cut surface (83).

2. The tea-making device with a time control of claim 1 wherein said filter is provided with a hollow inner space and a multitude of filter holes on a lateral wall thereon.

3. The tea-making device with a time control of claim 1 wherein a bottom rim of said main body is provided with a lower flange with a plurality of retaining projections, and wherein a top rim of said bottom cup is provided with corresponding retaining flange.

4. The tea-making device with a time control of claim 1 wherein said upper receptacle of said main body further includes a plurality of locking columns that are erected upright, and wherein said driving stick mount and said locking mount are respectively provided with corresponding through holes for being inserted by locking pieces so that said locking columns can retain said driving stick mount and said locking mount.

5. The tea-making device with a time control of claim 1 wherein a bottom side of said locking mount is provided with a positioning mount containing a pivotally attached positioning piece, and a top side of said locking mount is provided with an upper window that is aligned with said positioning mount that is driven by a driving piece on a bottom side of said driving ring; within said upper window, an upper end of said positioning piece being provided with a spring; a top side of said driving stick mount being provided with a lower window for the insertion of said positioning mount.

6. The tea-making device with a time control of claim 1 wherein a free end of said driving stick is provided with an annular groove and a top side of said ball stopper is provided with a locking groove; said ball stopper being made of a rubber material.

7. The tea-making device with a time control of claim 1 wherein a top end of said top cap is provided with a top dip wherein a central through hole is formed for holding a top locking piece; said top dip further including a top plug; a top surface of said timer being provided with a hole with a screw thread for the insertion of said top locking piece through said through hole of said top cap; an upper side of said driving ring being provided with a plurality of through holes for the insertion of said locking pieces into a plurality of column projections extended from a bottom surface of said timer.

8. The tea-making device with a time control of claim 1 wherein a circumference wall of said driving ring is provided with a plurality of pin holes and a lateral wall of said driven disk is provided with corresponding pin slots for the insertion of pins that connect said driving ring and said driven disk.

## Patentansprüche

1. Gerät zum Aufbrühen von Tee mit Zeitmessung, umfassend einen Hauptkörper (1) mit einem oberen Gefäß (10), das eine Positionierungsnut (12) auf seiner Innenwand aufweist und das des weiteren eine zentrale Ringnut (13) aufweist, die mit einer Feder (19) gekoppelt ist, sowie eine zentrale Durchgangsbohrung (14), die sich durch die Bodenseite des Gefäßes erstreckt, wobei eine untere Hälfte des Hauptkörpers mit einem unteren Gefäß (15) ausgestattet ist, das ein bauchiges Filterlager (16) mit einer unteren Halterungsnut (17) zum Anschluß eines sich in Längsrichtung erstreckenden Filters (18) aufweist, ferner umfassend einen Treibstockaufsatz (2), der in dem oberen Gefäß (10) des Hauptkörpers gelagert ist, wobei eine Seitenwand des Treibstockaufsatzes mit mehreren gleichmäßig verteilten Führungsvorsprüngen (22) versehen ist, die jeder eine untere, schräg abgeschnittene Oberfläche (23) aufweisen, der Treibstockaufsatz (2) ferner mit einer Positionierungswulst (24) neben einem der Führungsvorsprünge (22) und einem Treibstab (25) mit einem kugelförmigen Anschlag (27) versehen ist, welcher auf einer Bodenseite des besagten Treibstockaufsatzes gelagert ist; ferner umfassend einen Befestigungsaufsatz (3), der in dem oberen Gefäß (10) gelagert ist und auf seiner Oberseite einen zentralen Treibstockeinsatz (32) hat; des weiteren umfassend eine Bodentasse (4), die an einer Bodenseite des Hauptkörpers angebracht ist und eine zentrale Durchgangsöffnung (41) in einem Bodenteil aufweist; des weiteren umfassend eine obere Kappe (5), die auf einer Oberseite des Hauptkörpers angebracht ist; einen Zeitmesser (6) in der oberen Kappe (5), wobei die Bodenseite des Zeitmessers mit einem Übertragungszahnrad (62) und einem Einsatzrad (63) versehen ist; des weiteren umfassend einen Antriebsring (7) mit einer zentralen Durchgangsbohrung (70), der unter dem Zeitmesser (6) angebracht ist; und schließlich umfassend eine angetriebene Scheibe (8), die mit dem Treibring (7) gekoppelt ist und eine bodenseitige Oberfläche aufweist, die mit mehreren gleichförmig verteilt angeordneten angetriebenen Flügeln (82) versehen ist, von denen jeder eine obere schräg abgeschnittene Oberfläche (83) besitzt.

2. Gerät zum Aufbrühen von Tee mit Zeitmessung nach Anspruch 1, **dadurch gekennzeichnet, daß** das Filter mit einem hohlen Innenraum und auf einer Seitenwand mit einer Vielzahl von Filterlöchern versehen ist.

3. Gerät zum Aufbrühen von Tee mit Zeitmessung nach Anspruch 1, **dadurch gekennzeichnet, daß** ein Bodenrand des Hauptkörpers mit einem unteren Flansch versehen ist, der eine Vielzahl von Halterungsvorsprüngen aufweist, und daß ein oberer Rand der unteren Tasse mit einem entsprechenden Rückhalteflansch versehen ist.

4. Gerät zum Aufbrühen von Tee mit Zeitmessung nach Anspruch 1, **dadurch gekennzeichnet, daß** das obere Gefäß des Hauptkörpers ferner mit mehreren Verriegelungssäulen versehen ist, die aufrecht stehen, und daß der Treibstockaufsatz bzw. der Befestigungsaufsatz mit entsprechenden Durchgangsbohrungen ausgestattet ist, um durch Verriegelungsstücke eingesetzt werden zu können, so daß die Verriegelungsstücke den Treibstockeinsatz und den Befestigungsaufsatz festhalten können.

5. Gerät zum Aufbrühen von Tee mit Zeitmessung nach Anspruch 1, **dadurch gekennzeichnet, daß** eine Bodenseite des Befestigungseinsatzes mit einem Positionierungsaufsatz versehen ist, der ein verschwenkbar angebrachtes Positionierungsstück aufweist, und daß eine Oberseite des Befestigungsaufsatzes mit einem oberen Fenster versehen ist, das mit dem Positionierungsaufsatz fluchtend ausgerichtet ist, der durch ein Antriebsstück auf der Bodenseite des Antriebsrings angetrieben wird, wobei in dem oberen Fenster ein oberes Positionierungsstück mit einer Feder vorgesehen ist und die Oberseite des Treibstockaufsatzes ein unteres Fenster zum Einsetzen des Positionierungseinsatzes aufweist.

6. Gerät zum Aufbrühen von Tee mit Zeitmessung nach Anspruch 1, **dadurch gekennzeichnet, daß** ein freies Ende des Treibstockes mit einer Ringnut versehen ist, und eine Oberseite des Kugelanschlags eine Arretierungsnut aufweist, und daß der Kugelanschlag aus einem Gummimaterial besteht.

7. Gerät zum Aufbrühen von Tee mit Zeitmessung nach Anspruch 1, **dadurch gekennzeichnet, daß** das obere Ende der oberen Kappe mit einer oberen Vertiefung versehen ist, in der sich eine zentrale Durchgangsbohrung befindet, die ein oberes Arretierungsstück aufnimmt, daß die obere Vertiefung ferner mit einem oberen Stopfen versehen ist, daß die obere Oberfläche des Zeitmessers ein Loch mit Schraubgewinde aufweist, so daß das obere Arretierungsstück durch dieses Loch der oberen Kappe eingesteckt werden kann, und daß eine Oberseite des Antriebsrings mit mehreren Durchgangslöchern für den Einsatz von Arretierungsstücken in eine Vielzahl von säulenförmigen Vorsprüngen versehen ist, die von einer bodenseitigen Oberfläche des Zeitmessers ausgehen.

8. Gerät zum Aufbrühen von Tee mit Zeitmessung nach Anspruch 1, **dadurch gekennzeichnet, daß** eine Umfangswand des Antriebsrings mit mehreren Stiftlöchern versehen ist, und eine Seitenwand der Antriebsscheibe entsprechende Stiftschlitze zum Einstecken der Stifte aufweist, die den antreibenden Ring und die antreibende Scheibe verbinden.

## Revendications

1. Appareil pour la préparation de thé avec commande temporelle, comprenant :
un corps principal (1) doté d'un réceptacle supérieur (10) avec une gorge de positionnement (12) sur une paroi intérieure de celui-ci, ledit réceptacle supérieur (10) incluant en outre une gorge annulaire centrale (13) couplée avec un ressort (19) et un trou traversant central (14) qui s'étend à travers un côté inférieur de celui-ci, une moitié inférieure dudit corps principal étant pourvue d'un réceptacle inférieur (15) avec une monture bombée pour filtre (16) avec une gorge de retenue inférieure (17) afin de connecter un filtre (18) qui s'étend longitudinalement ;
une monture (2) pour tige d'entraînement, montée à l'intérieur dudit réceptacle supérieur (10) dudit corps principal, une paroi latérale de ladite monture pour tige d'entraînement étant distribuée uniformément avec une pluralité de projections de guidage (22) ayant chacune une surface inférieure (23) taillée en oblique, ladite monture (2) pour tige d'entraînement incluant en outre une bosse de positionnement (24) adjacente à l'une desdites projections de guidage (22) et une tige d'entraînement (25) avec un arrêt terminal (27) en forme de bille monté sur un côté inférieur de ladite monture pour tige d'entraînement ;
une monture de blocage (3) montée à l'intérieur dudit réceptacle supérieur (10) ayant une monture d'insertion centrale (32) pour tige d'entraînement sur une surface supérieure de celle-ci ;
une coupelle inférieure (4) attachée sur un côté inférieur dudit corps principal et ayant un trou traversant central (41) sur une portion inférieure de celle-ci ;
un capuchon supérieur (5) attaché sur un côté supérieur dudit corps principal ;
un temporisateur (6) monté à l'intérieur dudit capuchon supérieur (5), un côté inférieur dudit temporisateur ayant un engrenage de transmission (62) et une roulette d'introduction (63) ;
une bague d'entraînement (7) avec un trou traversant central (70) installée au-dessous dudit temporisateur (6) ; et
un disque entraîné (8) couplé avec ladite de bague d'entraînement (7), une surface inférieure dudit disque entraîné étant pourvue uniformément d'une pluralité de pales entraînées (82) ayant chacune une surface supérieure (83) taillée en oblique.

2. Appareil pour la préparation de thé avec commande temporelle, selon la revendication 1, dans lequel ledit filtre est pourvu d'un espace intérieur creux et d'une multitude de trous pour filtre sur sa paroi latérale.

3. Appareil pour la préparation de thé avec commande temporelle, selon la revendication 1, dans lequel un rebord inférieur dudit corps principal est pourvu d'une bride inférieure avec une pluralité de projections de retenue, et dans lequel un rebord supérieur de ladite coupelle inférieure est pourvu d'une bride de retenue correspondante.

4. Appareil pour la préparation de thé avec commande temporelle, selon la revendication 1, dans lequel ledit réceptacle supérieur dudit corps principal inclut en outre une pluralité de colonnes de blocage qui sont dressées verticalement, et dans lequel ladite monture pour tige d'entraînement et ladite monture de blocage sont respectivement pourvues de trous traversants correspondants destinés à l'introduction de pièces de blocage, de sorte que lesdites colonnes de blocage peuvent retenir ladite monture pour tige d'entraînement et ladite monture de blocage.

5. Appareil pour la préparation de thé avec commande temporelle, selon la revendication 1, dans lequel un côté inférieur de ladite monture de blocage est pourvu d'une monture de positionnement contenant une pièce de positionnement attachée en pivotement, et un côté supérieur de ladite monture de blocage est doté d'une fenêtre supérieure qui est alignée avec ladite monture de positionnement qui est entraînée par une pièce d'entraînement sur un côté inférieur de ladite bague d'entraînement ; une extrémité supérieure de ladite pièce de positionnement étant pourvue d'un ressort, à l'intérieur de ladite fenêtre supérieure ; et un côté supérieur de ladite monture pour tige d'entraînement étant doté d'une fenêtre inférieure pour l'introduction de ladite monture de positionnement.

6. Appareil pour la préparation de thé avec commande temporelle, selon la revendication 1, dans lequel une extrémité libre de ladite tige d'entraînement est pourvue d'une gorge annulaire et un côté supérieur dudit arrêt à bille est pourvu d'une gorge de blocage ; ledit arrêt à bille étant réalisé en un matériau à base de caoutchouc.

7. Appareil pour la préparation de thé avec commande temporelle, selon la revendication 1, dans lequel une extrémité supérieure dudit capuchon supérieur est pourvue d'un renfoncement supérieur dans lequel est formé un trou traversant central pour retenir une pièce de blocage supérieure ; ledit renfoncement supérieur incluant en outre un bouchon supérieur ; une surface supérieure dudit temporisateur étant pourvue d'un trou avec un taraudage pour l'introduction de ladite pièce de blocage supérieure à travers le ledit trou traversant dudit capuchon supérieur ; un côté supérieur de ladite de bague d'entraînement étant pourvu d'une pluralité de trous traversants pour l'introduction desdites pièces de blocage dans une pluralité de projections en colonne qui s'étendent depuis une surface inférieure dudit temporisateur.

8. Appareil pour la préparation de thé avec commande temporelle, selon la revendication 1, dans lequel une paroi circonférentielle de ladite bague d'entraînement est pourvue d'une pluralité de trous à broche, et une paroi latérale dudit disque entraîné est pourvue de fentes à broche correspondantes pour l'introduction de broches qui connectent ladite bague d'entraînement et ledit disque entraîné.
